# EUROPÄISCHE PATENTSCHRIFT

(11) **EP 0 626 564 B1**
(45) Veröffentlichungstag und Bekanntmachung des Hinweises auf die Patenterteilung: **18.06.1997**
(21) Anmeldenummer: 94106712.6
(22) Anmeldetag: 29.04.1994
(51) Int. Cl.: G01D 5/34

(54) **Lichtelektrische Längen- oder Winkelmesseinrichtung**
Photoelectric length and angle measuring device
Dispositif de mesure d'angles ou de longueur

(30) Priorität: 14.05.1993 DE 4316250
(43) Veröffentlichungstag der Anmeldung: 30.11.1994
(73) Patentinhaber: Dr. Johannes Heidenhain GmbH, D-83292 Traunreut (DE)
(72) Erfinder: Ernst, Alfons, Dipl.-Ing., D-83301 Traunreut (DE); Brandl, Sebastian, Dipl.-Ing. (FH), D-83352 Altenmarkt (DE); Meyer, Hermann, Dipl.-Ing. (FH), D-83458 Weissbach (DE)

(56) Entgegenhaltungen:
- EP-A- 0 482 224
- EP-A- 0 496 072
- DE-B- 1 245 151
- DE-U- 9 209 777

## Beschreibung

Die Erfindung betrifft eine lichtelektrische Längen- oder Winkelmeßeinrichtung gemäß dem Oberbegriff des Anspruches 1.

Eine gattungsgemäße lichtelektrische Längen- oder Winkelmeßeinrichtung ist etwa aus dem DE-GM 92 09 777 bekannt. Dort wird vorgeschlagen zur Trennung der phasenversetzten Abtastsignale eine Prismenplatte mit mehreren unterschiedlich geneigten Bereichen vorzusehen. Die unterschiedlich geneigten Bereiche sind hierbei parallel zur Meßrichtung angeordnet, das heißt parallel zu derjenigen Richtung, in der Maßstab und Abtasteinheit relativ zueinander bewegt werden. Im Fall einer derartigen Anordnung ergeben sich insbesondere dann Probleme, wenn lokale Verschmutzungen auf Seiten der Maßstabteilung vorliegen. Dann können Signalanteile, welche aus den unterschiedlichen Abtastfenstern gewonnen werden, gegebenenfalls unterschiedliche Signalamplituden aufweisen, was sich wiederum bei der Signalweiterverarbeitung nachteilig bemerkbar macht.

Eine ähnliche Meßeinrichtung ist aus der Dissertation von Jörg Willhelm "Dreigitterschrittgeber", TU Hannover, 1978, Seite 65 bekannt. Zwei entgegengesetzt geneigte Keile trennen die phasenverschobenen Lichtbündel und richten sie auf Fotodetektoren.

Ebenso ist aus der DE 35 41 199 C1 eine Anordnung bekannt, bei der Prismen oder dezentrierte Linsen vorgesehen sind, um Teilstrahlenbündel gegensinnig auf räumlich getrennte Detektoren zu lenken.

Bei diesen bekannten Meßeinrichtungen müssen die einzelnen Prismen zueinander und gegenüber der Abtastplatte sehr genau positioniert werden. Die Justierung der Prismen ist sehr aufwendig und toleranzbehaftet. Darüberhinaus ist das Verkitten kleiner Prismen schwierig. Es entstehen somit hohe Herstellkosten.

Aus der DE-38 34 676 A1 ist eine Vorrichtung bekannt, bei der über dem Meßteilungs-Abtastfeld ein quer zur Meßrichtung ablenkendes Prisma angeordnet ist, durch das eine optische Trennung der Abtaststrahlengänge bei der Abtastung der Meßteilung und der Referenzmarken erreicht wird.

In der DE-AS 12 45 151 und der DE-AS 12 35 605 sind inkrementale Meßeinrichtungen beschrieben, bei denen die phasenverschobenen Abtastsignale aus einer Teilungsperiode des Maßstabes gewonnen werden. Hierzu sind Prismen mit unterschiedlich geneigten Oberflächen vorgesehen, welche Teilstrahlenbündel auf räumlich getrennte Detektoren lenken. Bei der DE-AS 12 45 151 werden die Prismen von einer Abtastoptik gebildet, welche innerhalb einer lungsperiode des Maßstabes zueinander geneigte Teilflächen aufweist.

Die in der DE-AS 12 45 151 und der DE-AS 12 35 605 beschriebenen Anordnungen sind nur für inkrementale Meßeinrichtungen mit relativ großer Teilungsperiode des Maßstabes geeignet. Die Prismen ersetzen das üblicherweise verwendete Abtastgitter.

Der Erfindung liegt die Aufgabe zugrunde, die Trennung von Strahlenbündeln durch einfache Maßnahmen zu erreichen, wobei sich Fehler der Meßteilung möglichst auf alle Abtastfelder gleichmäßig auswirken sollen.

Diese Aufgabe wird durch eine Längen- oder Winkelmeßeinrichtung mit den Merkmalen des Anspruches 1 gelöst.

Besonders vorteilhafte Ausgestaltungen der Erfindung sind in den abhängigen Ansprüchen angegeben.

Die Vorteile der Erfindung liegen darin, daß durch die Anordnung der Prismen in einer Reihe quer zur Meßrichtung Signalverzerrungen aufgrund von Teilungsfehlern praktisch ausgeschlossen sind. Die Zuordnung der Prismenflächen und die Fokussierung der Strahlenbündel auf die Fotodetektoren läßt relativ kleine Fotodetektoren zu.

Mit Hilfe eines Ausführungsbeispiels wird die Erfindung nachfolgend anhand der Zeichnungen näher erläutert.

Es zeigen
- Figur 1: eine schematische Darstellung einer genmeßeinrichtung im Auflicht arbeitend und deren Teilansichten;
- Figur 2: eine von Figur 1 abweichende Darstellung einer Längenmeßeinrichtung und deren Teilansichten;
- Figur 3: eine Variante für zwei Meßrichtungen;
- Figur 4: eine Variante zur Abtastung einer derfläche und
- Figur 5: eine Variante mit Prismen, deren flächen zur optischen Achse entgegengesetzt geneigt sind.

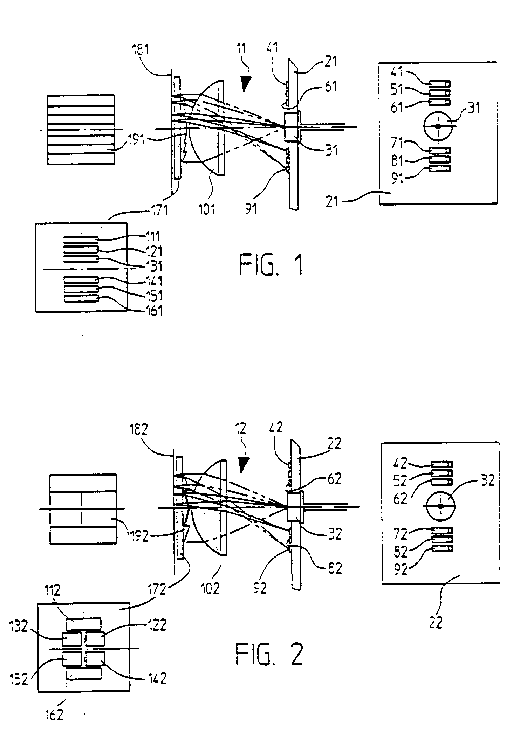

In Figur 1 ist schematisch eine im Auflichtverfahren arbeitende inkrementale Längenmeßeinrichtung 11 dargestellt. Eine Platine 21 enthält eine Lichtquelle 31 und mehrere Fotodetektoren 41, 51, 61, 71, 81, 91. Die Lichtquelle 31 sendet ein Strahlenbündel aus, das von einer Linse 101 kollimiert wird und durch Abtastfelder 111, 121, 131, 141, 151, 161 einer auch in Draufsicht dargestellten Abtastplatte 171 auf einen Maßstab 181 fällt. Zwischen der Linse 101 und der Abtastplatte 171 ist eine Prismenplatte 191 zur Strahlteilung angeordnet. Teilstrahlenbündel, die durch die Abtastfenster 111, 121, 131, 141, 151, 161 mit Inkrementalteilungen treten, werden an einer Inkrementalteilung, bevorzugt einem Amplitudengitter des Maßstabes 181 reflektiert, durchlaufen dann wiederum die Inkrementalteilung der Abtastfelder 111, 121, 131, 141, 151, 161 sowie die Prismenplatte 191 und gelangen schließlich über die Linse 101 auf die Fotodetektoren 41, 51, 61, 71, 81, 91. Von diesen Fotodetektoren 41, 51, 61, 71, 81, 91 werden in bekannter Weise Inkrementalsignale abgeleitet.

Dabei ist der Fotodetektor 71 dem Abtastfenster 131 zugeordnet, aus dem das 0°-Signal gewonnen wird. Mit Hilfe des Abtastfensters 141 und des Fotodetektors 61 wird das 180°-Signal gewonnen. Aus dem tastfenster 121 und dem Fotodetektor 81 das 90°-Signal und aus dem Abtastfenster 151 und dem Fotodetektor 51, das 270°-Signal. Das Abtastfenster 121 und der Fotodetektor 91 liefern ein Referenzsignal und mit dem Abtastfenster 161 und dem Fotodetektor 41 wird ein sogenanntes Gleichtaktsignal gewonnen, mit dessen Hilfe die Beleuchtung 31 auf eine konstante Strahlungsleistung geregelt wird.

Die beschriebenen Strahlengänge zur Gewinnung der Inkrementalsignale werden durch Prismenkeile mit unterschiedlichem Keilwinkel abgelenkt und auf die einzelnen Fotodetektoren 41, 51, 61, 71, 81, 91 fokussiert.

Durch die Fokussierung sind große Fotodetektoren nicht erforderlich, so daß kleine Fotodetektoren verwendet werden können, die aufgrund ihrer kleinen Kapazität für höhere Frequenzen geeignet sind.

Bei der in Figur 2 dargestellten Auflicht-Längenmeßeinrichtung 12 sind Abtastfenster 112, 122, 132, 142, 152, 162 und zugehörige Prismen 192 so aufeinander abgestimmt, daß Teilstrahlenbündel wieder auf Fotodetektoren 42, 52, 62, 72, 82, 92 fokussiert werden, mit deren Hilfe Meßsignale generiert werden. Bei dieser Ausführungsform sind die Abtastfenster 112, 122, 132, 142, 152, 162 und die zugeordneten Prismen 192 in zwei zueinander parallelen Reihen quer zur Meßrichtung angeordnet, was tastungstechnische Vorteile bietet. Die Prismen 192 weisen unterschiedliche Keilwinkel auf, so daß die Fotodetektoren 42, 52, 62, 72, 82, 92 geometrisch in gleicher Weise angeordnet werden können, wie in Figur 1 dargestellt ist.

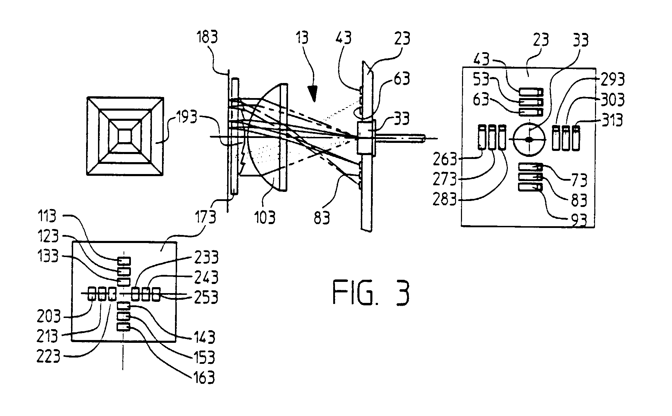

In Figur 3 ist eine Meßeinrichtung 13 dargestellt, die analog zur Ausführungsform gemäß Figur 1 aufgebaut ist, jedoch für zwei senkrecht zueinander verlaufende Meßrichtungen. Dazu ist der Meßteilungsträger 183 mit einem an sich bekannten Kreuzgitter versehen. Eine Abtastplatte 173 weist daher neben den Abtastfenstern 113, 123, 133, 143, 153, 163 in analoger Weise weitere Abtastfenster 203, 213, 223, 233, 243, 253 auf, die geometrisch rechtwinklig zur vorgenannten Reihe von Abtastfenstern 113, 123, 133, 143, 153, 163 verlaufen. Eine Prismenplatte 193 weist zueinander rechtwinklig verlaufende, gegenseitig geneigte Bereiche auf, die die Teilstrahlenbündel sowohl auf Fotodetektoren 43, 53, 63, 73, 83, 93 fokussieren, als auch auf dazu rechtwinklig angeordnete Fotodetektoren 263, 273, 283, 293, 303, 313. Für jede Meßrichtungskoordinate ist auf diese Weise eine im Grunde unabhängige Lagemeßeinrichtung geschaffen, die in kleiner Bauform eine Mehrkoordinaten-Meßeinrichtung darstellt. Die Prismen können in besonders vorteilhafter Weise in Form der Prismenplatte 193 integriert sein.

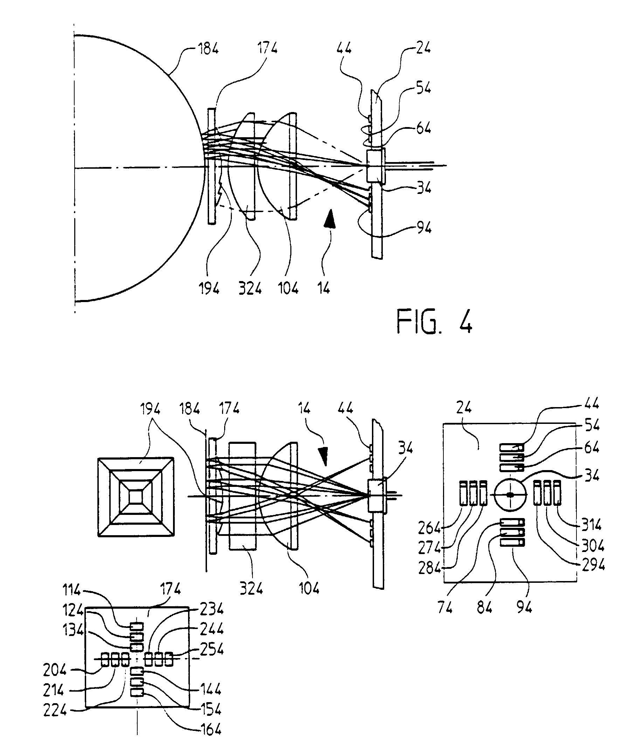

Eine weitere, besonders vorteilhafte Ausführungsform ist in der Figur 4 dargestellt. Bei einem Grundaufbau, der im Prinzip der Mehrkoordinaten-Meßeinrichtung gemäß Figur 3 gleicht, befindet sich in diesem Fall die Kreuzteilung auf einem Zylinder, der den Meßteilungsträger 184 bildet. Die Prismen sind wieder als Prismenplatte 194 ausgebildet, deren Keilflächen zueinander koordinatenabhängig senkrecht stehen, so daß wieder jeweils eine Reihe von Prismen gebildet wird, die senkrecht zur Meßrichtung verläuft. Mit diesem Meßsystem, deren teilungsträger 184 ein Zylinder ist, können gleichzeitig rotatorische und translatorische Bewegungen gemessen werden. Damit die gebeugten Teilstrahlenbündel immer senkrecht auf die Meßteilung des teilungsträgers 184 fallen, ist zwischen der Linse 104 und der Prismenplatte 194 eine Zylinderlinse 324 angeordnet, deren Brennlinie in der Achse des den Meßteilungsträger 184 bildenden Zylinders liegt. Da die weiteren Bauelemente funktional den bisher erläuterten Ausführungsbeispielen entsprechen, wird auf eine erneute Erläuterung zur Vermeidung von Wiederholungen verzichtet. Gleichartige Bauelemente tragen gleiche Bezugszeichen, denen die Figurenbezifferung als Index nachgestellt ist.

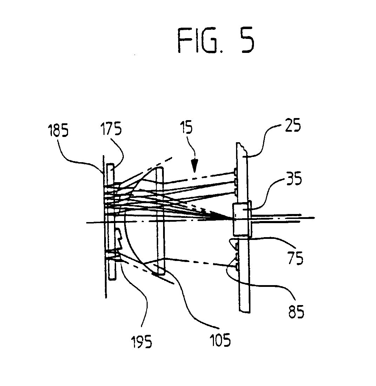

Dies gilt auch für das Auführungsbeispiel in Figur 5, welches sinngemäß dem aus Figur 1 entspricht. Allerdings verlaufen die Schrägen der Keilflächen in diesem Beispiel mit entgegengesetzter Neigung zur optischen Achse der Meßeinrichtung 15. Das hat zur Folge, daß auch die Ablenkung der Teilstrahlenbündel in entgegengesetzter Richtung erfolgt. Der Fachmann wählt im Einzelfall die passende Ablenkungsversion.

## Patentansprüche

1. Lichtelektrische Längen- oder Winkelmeßeinrichtung mit einem beleuchteten Meßteilungsträge (181), wenigstens einer Abtastplatte (171) mit mehreren Abtastfeldern und mehreren Prismen (191) mit mehreren unterschiedlich geneigten Bereichen zur Trennung von Strahlenbündeln sowie mit wenigstens einer Linse (101) zu Fokussierung der Strahlenbündel auf nachgeordnete Fotodetektoren,
dadurch gekennzeichnet,
daß die Prismen (191) in wenigstens einer Reihe quer zur Meßrichtung angeordnet sind und daß die unterschiedlich geneigten Bereiche der Prismen (191) je einem Abtastfeld (111, 121, 131, 141, 151, 161) der Abtastplatte (171) zugeordnet sind, wobei die von den Prismen (191) abgelenkten Strahlenbündel über die Linse (101) auf die Fotodetektoren (41, 51, 61, 71, 81, 91) fokussiert werden.

2. Lichtelektrische Längen- oder Winkelmeßeinrichtung nach Anspruch 1, dadurch gekennzeichnet, daß eine Lichtquelle (31) und symmetrisch dazu mehrere Fotodetektoren auf einer Platine (21) angeordnet sind, daß nach dieser Platte (21) in Strahlrichtung eine Linse (101) angeordnet ist, danach die Reihe von Prismen (191), nachfolgend die Abtastplatte (171) und danach ein reflektierender Meßteilungsträger (181).

3. Lichtelektrische Längen- oder Winkelmeßeinrichtung nach Anspruch 1, dadurch gekennzeichnet, daß der Meßteilungsträger (183) eine Kreuzteilung mit senkrecht zueinander verlaufenden Teilungsmarkierungen aufweist, und daß die Prismen (194) in Reihen angeordnet sind, die jeweils senkrecht zu der ihnen zugeordneten Meßrichtung verlaufen.

4. Lichtelektrische Längen- oder Winkelmeßeinrichtung nach Anspruch 1, dadurch gekennzeichnet, daß der Meßteilungsträger eine Zylinderfläche (184) ist.

5. Lichtelektrische Längen- oder Winkelmeßeinrichtung nach Anspruch 4, dadurch gekennzeichnet, daß die Zylinderfläche (184) eine Kreuzteilung mit senkrecht zueinander verlaufenden Teilungsmarkierungen aufweist, denen Reihen von Prismen (194) zugeordnet sind, die jeweils senkrecht zu der ihnen zugeordneten Meßrichtung verlaufen.

6. Lichtelektrische Längen- oder Winkelmeßeinrichtung nach Anspruch 5, dadurch gekennzeichnet, daß eine Zylinderlinse (324) im Strahlengang angeordnet ist, die die Beleuchtungsstrahlenbündel auf die Zylinderachse fokussiert.

## Claims

1. Photoelectric length or angle measuring device with an illuminated measurement division carrier (181), at least one scanner plate (171) with a plurality of scanner fields and a plurality of prisms (191) with a plurality of differently inclined regions for separating ray beams as well as with at least one lens (101) for focusing the ray beam on photodetectors arranged after it,
**characterised in that**
the prisms (191) are arranged in at least one row transversely to the measuring direction and in that the differently inclined regions of the prisms (191) are each allocated to one scanner field (111, 121, 131, 141, 151, 161) of the scanner plate (171), the ray beams deflected by the prisms (191) being focused via the lens (101) on to the photodetectors (41, 51, 61, 71, 81, 91).

2. Photoelectric length or angle measuring device according to claim 1, **characterised in that** a light source (31) and a plurality of photodetectors positioned symmetrically to same are arranged on a board (21), in that a lens (101) is arranged after this board (21) in the direction of the beam, then the row of prisms (191),
subsequently the scanner plate (171) and thereafter a reflective measurement division carrier (181).

3. Photoelectric length or angle measuring device according to claim 1, **characterised in that** the measurement division carrier (183) has a crosswise division with division marks running perpendicular to one another, and that the prisms (194) are arranged in rows which in each case run perpendicular to the measurement direction with which they are associated.

4. Photoelectric length or angle measuring device according to claim 1, **characterised in that** the measurement division carrier is a cylinder surface (184).

5. Photoelectric length or angle measuring device according to claim 4, **characterised in that** the cylinder surface (184) has a crosswise division with division marks running perpendicular to one another and to which marks rows of prisms (194) are allocated which in each case run perpendicular to the measurement direction with which they are associated.

6. Photoelectric length or angle measuring device according to claim 5, **characterised in that** a cylindrical lens (324) is arranged in the beam path, which lens focuses the illumination ray beam on to the cylinder axis.

## Revendications

1. Dispositif photoélectrique de mesure de longueurs ou d'angles comprenant un support de graduation de mesure (181) éclairé, au moins une plaque d'exploration (171) avec plusieurs champs d'exploration et plusieurs prismes (191) avec plusieurs zones biaises d'inclinaisons différentes pour la séparation de faisceaux de rayons ainsi qu'au moins une lentille (101) pour la focalisation des faisceaux de rayons sur des photodétecteurs, caractérisé par le fait que les prismes (191) sont disposés en au moins une rangée transversalement à la direction de mesure et que les zones des prismes (191) d'inclinaisons différentes sont associées respectivement à une fenêtre d'exploration (111, 121, 131, 141, 151, 161) de la plaque d'exploration (171), les faisceaux de rayons déviés par les prismes (191) étant focalisés par la lentille (101) sur les photodétecteurs (41, 51, 61, 71, 81, 91).

2. Dispositif photoélectrique de mesure de longueurs ou d'angles suivant la revendication 1, caractérisé par le fait qu'une source lumineuse (31) et, symétriquement à cette dernière, plusieurs photodétecteurs sont disposés sur une platine (21), que ladite platine (21) est suivie dans la direction des rayons par une lentille (101), puis par la rangée de prismes (191), puis par la plaque d'exploration (171) et ensuite par un support de graduation de mesure (181) réfléchissant.

3. Dispositif photoélectrique de mesure de longueurs ou d'angles suivant la revendication 1, caractérisé par le fait que le support de graduation de mesure (183) présente une graduation en croix avec plusieurs marques de graduation perpendiculaires les unes aux autres, et que les prismes (194) sont disposés en rangées s'étendant respectivement perpendiculairement à la direction de mesure qui leur est associée.

4. Dispositif photoélectrique de mesure de longueurs ou d'angles suivant la revendication 1, caractérisé par le fait que le support de graduation de mesure est une surface cylindrique (184).

5. Dispositif photoélectrique de mesure de longueurs ou d'angles suivant la revendication 4, caractérisé par le fait que la surface cylindrique (184) présente une graduation en croix avec des marques de graduation qui s'étendent perpendiculairement les unes aux autres et auxquelles sont associées des rangées de prismes (194) s'étendant respectivement perpendiculairement à la direction de mesure qui leur est associée.

6. Dispositif photoélectrique de mesure de longueurs ou d'angles suivant la revendication 5, caractérisé par le fait que dans la marche des rayons est disposée une lentille cylindrique (324) qui focalise les faisceaux de rayons d'éclairage sur l'axe du cylindre.
